# EUROPEAN PATENT APPLICATION

(11) **EP 2 242 336 A1**
(43) Date of publication of application: **20.10.2010**
(21) Application number: 10158075.1
(22) Date of filing: 26.03.2010
(51) Int. Cl.: H05B 39/04, H05B 33/08

(54) **A converter device for driving light sources, corresponding method and computer program product**

(30) Priority: 02.04.2009 IT TO20090255
(71) Applicant: OSRAM Gesellschaft mit beschränkter Haftung, 81543 München (DE); Osram S.p.A. - Societa' Riunite Osram Edison Clerici, 20144 Milano (IT)
(72) Inventor: Faccin, Marco, 31031 Caerano San Marco (Treviso) (IT); Haeusser, Helmut, 83301 Traunreut (DE)
(74) Representative: Bosotti, Luciano

(57) **Abstract**

A device for driving light sources (L), including:
- a self-oscillating output stage (112) for driving at least one light source (L), wherein the output stage (112) has a supply line for a supply signal (V), and
- a starter circuit (Rₛ, Cₛ, D, T_{d}) coupled to said supply line for starting the self-oscillation of the output stage (112),
- an electronic switch (Tₑ) associated with the self-oscillating output stage (112), wherein the electronic switch (Tₑ) is configured for stopping selectively the oscillation of the output stage (112), and
- a control circuit (108) adapted for detecting the presence of a DC supply signal (V) adapted to induce the oscillation of the self-oscillating output stage (112), and wherein the control circuit (108) is configured, in the presence of a DC supply signal, to drive the electronic switch (Tₑ) and selectively stop the oscillation of the output stage (112).

## Description

### Field of the invention

This disclosure relates to electronic converters.

This disclosure was devised with specific attention paid to its possible application to driving a light source such as, for example, a LED module or a low voltage halogen lamp.

### Description of the related art

From the state of the art there are known various solutions of electronic converters, comprising a self-oscillating output stage, for example a self-oscillating half-bridge. Such converters are often used to supply light sources such as low voltage halogen lamps.

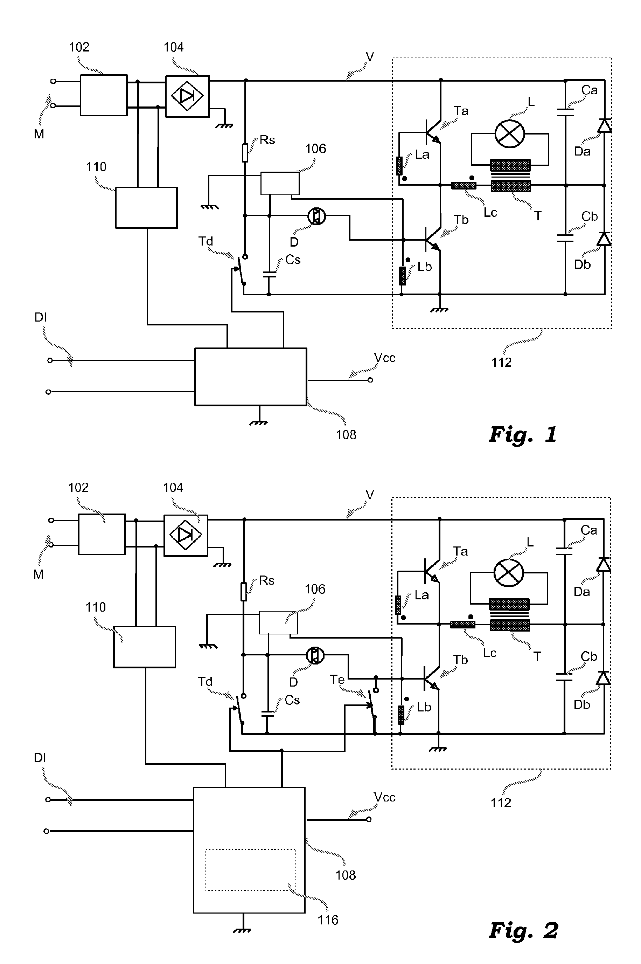

Figure 1 shows the main components of such a converter. Specifically, the converter receives as input, for example from the mains, a supply signal M. After being optionally filtered by a line filter 102, the supply signal is rectified by a rectifier 104, so as to generate a rectified voltage V, with a double frequency with respect to the supply signal.

The core of the converter is a self-oscillating half-bridge 112, having a supply line for the supply signal V. The half-bridge 112 comprises two power bipolar transistors (BJT) Tₐ and T_{b}, connected in series between voltage V and ground. The transistors Tₐ e T_{b} are driven by a current transformer comprising three windings Lₐ, L_{b} e L_{c}. Specifically, the winding Lₐ is connected between the base and the emitter of the transistor Tₐ and the winding L_{b} is connected between the base and the emitter of the transistor T_{b}, which is also connected to ground. The third winding L_{c} is connected between the emitter of the transistor Tₐ (or the collector of transistor T_{b}) and a transformer T, which supplies at least one light source L. The transformer T is also connected to a node between two capacitors Cₐ and C_{b}, connected in series between the voltage V and ground. The capacitors Cₐ and C_{b} can also have respective diodes Dₐ and D_{b} connected in parallel.

The half-bridge 112 is associated to a starter circuit, comprising a resistor Rₛ and a capacitor Cₛ connected in series between the voltage V and ground. Typically, the node between the components Rₛ e Cₛ is connected to a diac D, which is also connected to the base of the transistor T_{b}.

The capacitor Cₛ is adapted to be charged by a voltage V through the resistor Rₛ. As soon as the voltage through the capacitor Cₛ reaches a predetermined level, the diac D, that serves as a trigger component, breaks down and the transistor T_{b} is activated.

Subsequently, the voltage at the center point of the half-bridge (between Tₐ and T_{b}) rapidly changes from voltage V to zero, so as to apply a positive voltage to the secondary winding L_{b}, which keeps the transistor Tb activated.

Such a circuit comprises moreover a stop circuit 106 for the diac D, adapted to discharge the capacitor Cₛ in order to avoid a double operation of the transistor T_{b}, or in general to prevent the propagation of noise through the diac D during normal operation.

Further details of operation of an electronic converter of this kind, comprising a self-oscillating half-bridge (or functionally equivalent solutions) are well known to the skilled in the art, which makes it unnecessary to provide herein a detailed description thereof.

As already mentioned before, the converter operates on a voltage V that is a rectified voltage, with a double frequency with respect to the frequency of the supply signal M. The oscillation of the half-bridge 112 is therefore stopped at each zero crossing of the supply M, and then retriggered.

Various solutions make use of this behaviour to regulate the brightness of the light source L, performing the function known as "dimming". In particular, the converter may comprise a further input DI, for receiving a dimming adjustment command, for example via control commands such as "Digital Addressable Lighting Interface" (DALI).

These adjustment commands on the line DI are supplied to a control unit 108, for example a microprocessor fed with a Vcc voltage. For example, the control unit 108 can drive a switch T_{d}, connected in parallel with the capacitor Cₛ, with a pulsed signal modulated with a Pulse-Width Modulation (PWM), in order to delay the charge of the capacitor Cₛ and therefore the activation of the half-bridge 112 by the diac D.

The PWM signal may also be synchronized with the supply signal M. For example, the control unit 108 can be connected to a zero crossing detector (ZCD) 110, in turn connected to the supply line M or to the filtered supply signal downstream the block 102, in such a way as to synchronize the driving of the switch T_{d} with the supply signal M.

In this way, the system performs substantially the function of controlling the "leading edge", making the half-bridge oscillate only during a given, selectively adjustable portion of the half-period of the supply signal M.

This architecture of an electronic converter supplies therefore a low-cost solution for dimming the light generated by the light source L.

### Object and summary of the invention

The operation described with reference to Figure 1 is dependent on the presence of an alternated current (AC) supply signal, for example 230VAC.

In the presence of a direct current (DC) supply signal, once activated, the half-bridge continues to oscillate irrespective of the condition of the switch T_{d}, which makes it impossible i.a. to perform the previously described dimming action.

The inventors have observed that this problem has so far been dealt with, for example, with a half-bridge comprised of two transistors (MOSFETs), directly controlled by a micro-processor, that is adapted to translate the regulation commands in a control of the PWM type.

This solution has drawbacks associated both to the complex circuitry and to the use of MOSFETs, which can reveal themselves sensitive to the current surges that may take place in this kind of converters. Moreover, the related control system is an important source of electromagnetic interference (EMI).

The object of the invention is therefore to provide an electronic converter that can avoid the above mentioned drawbacks.

According to the invention, such an object is achieved by means of a device having the features set forth in the claims that follow. The invention also relates to a corresponding method, as well as to a computer program product, loadable into the memory of at least one computer and comprising software code portions adapted to perform the steps of the method when the product is run on at least one computer.

The claims are an integral part of the disclosure of the invention provided herein.

In an embodiment, the electronic converter comprises an additional switch in order to stop the half-bridge self-oscillation, allowing to perform a dimming action also in the presence of a direct current supply.

In an embodiment, the half-bridge self-oscillation is stopped by a low resistance switch.

In an embodiment, this switch is controlled by a PWM signal. For example, the switch is subjected to a square wave voltage having a fixed frequency, and a control unit, for example a microprocessor, controls the duty cycle as a function of a command received on a control line.

In an embodiment, the control unit determines if the supply signal M is an AC signal or a DC signal. In the former case, the control unit can synchronize the PWM switching signal with the frequency of the AC supply signal. In the latter case, the control unit can activate and/o switch to a square wave generator, in order to create an internal synchronization signal. For example, it is possible to use for the purpose an internal or external oscillator of a microprocessor.

In an embodiment, a square wave generator is used having a frequency which is sufficiently high (e.g. 100 Hz) to avoid visible flickering of the light.

In an embodiment, the switch is also used to stop the converter when the control unit detects an abnormal condition (for example overload or unduly high temperature).

The device described herein provides therefore a low cost solution for an adjustable electronic converter. Specifically, the converter is adapted to operate both with an AC supply signal and with a DC supply signal.

This allows i.a. to use one and the same converter in different applications, without having to resort to two different types of converters.

The driving unit (e.g. a microprocessor) can be set up, for example through software, to detect the kind of supply under way (AC or DC) and to adapt to it the device operational mode.

The possibility to use power bipolar transistors (BJTs) instead of MOSFETs offers the advantage that BJTs are usually more resistant to current surges. Moreover, a self-oscillating half-bridge typically generates a low electromagnetic interference (EMI) level.

### Brief description of the annexed representations

The invention will now be described, by way of example only, with reference to the enclosed representations, wherein:
- Figure 1 has been previously described,
- Figure 2 is a circuit diagram showing an embodiment of an electronic converter, and
- Figures 3 and 4 show further details / variations of the basic layout of Figure 2.

### Detailed description of embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

Figures 2 to 4 show embodiments of an electronic converter that are based, as for their general architecture, on the same layout as in Figure 1. As a consequence, parts, elements and components which are identical or equivalent to those already described with reference to Figure 1 are indicated in Figures 2 to 4 by the same reference numerals. For the sake of brevity, the description thereof will therefore not be repeated.

The following description focuses on the half-bridge stop and/or starter circuit, and refers i.a. to the criteria that make it possible to start and to stop the oscillation of a self-oscillating output stage of an electronic converter. The person skilled in the art will therefore appreciate that the scope of the invention is not to be construed as limited to the specific solution of the self-oscillating output stage described herein.

The embodiment shown in Figure 2 comprises two switches T_{d} and Tₑ, controlled by a control unit 108 on the basis of an attenuation signal received at the input DI (for example DALI commands).

The switches T_{d} and Tₑ put the half-bridge operation (i.e. the start and the stop of the oscillation) under the control of the control unit 108.

In the embodiment presently considered, the switch T_{d} is connected in parallel to the capacitor Cₛ, adapted to start the half-bridge 112 through the diac D, which works as a trigger element.

When the switch T_{d} is closed, i.e. conductive, the capacitor Cₛ is short-circuited, and it cannot be charged with the voltage V through the resistor Rₛ.

When the switch T_{d} is open, i.e. non conductive, the capacitor Cₛ, that represents the lower branch of a divider RC with voltage V, is gradually charged with the voltage V through the resistor Rₛ. When the voltage at the ends of capacitor Cₛ reaches the value of the triggering voltage of the diac D, the latter activates the half-bridge oscillation.

By controlling the opening time of switch T_{d} it is consequently possible to adjust the time when the capacitor Cₛ starts to be charged, therefore setting the time when the diac D activates the oscillation of the half-bridge 112.

In the embodiment presently considered, the switch Tₑ is connected between the emitter and the base of the transistor T_{b} (i.e. in parallel with the winding L_{b}). As a consequence, once the oscillation has been triggered while the switch Tₑ was open, the oscillation of the half-bridge 112 can be stopped by closing the switch Tₑ.

In an embodiment, the switch Tₑ is connected between the base and the emitter of the transistor Tₐ (i.e. in parallel with the winding Lₐ).

In an embodiment, the control unit 108 is connected to a block 110, e.g. a zero crossing detector, which is sensitive to the supply signal M (or to its filtered version at the output of block 102), i.e. to the voltage V. The signal received by the block 110 can be used by the unit 108 to detect whether the electronic converter is being used with a signal V of the AC type or with a signal V of the DC type.

In the first instance (signal V of the AC type), the switch Tₑ can be kept stably open, and the circuit is adapted to operate substantially as already discussed with reference to Figure 1.

The signal received form the block 110 can also be used to synchronize the control signals driving the switches T_{d} and Tₑ, in such a way as to actuate both switches with PWM signals having a frequency corresponding to the signal V frequency, and with the duty cycle being controlled as a function of the signal received by the input DI.

In an embodiment, a common control signal is used for both switches.

In an embodiment it is possible to actuate the switches independently.

In an embodiment, it is possible to perform a "leading edge" dimming function, wherein the half-bridge is activated only during the second part of the half period of the supply signal M. This can be achieved by controlling the switch T_{d} in such a way as to delay the activation of the half-bridge 112. In this case, as already stated, the switch Tₑ can also stay open, so as to deploy an operation similar to the circuit shown in Figure 1.

In an embodiment, it is possible to perform a "trailing edge" dimming function, where the half-bridge is activated only during a first part of the half period of the supply signal M. This can be achieved by controlling the switch Tₑ in such a way as to stop the self-oscillation of the half-bridge 112 after a predetermined part of each positive pulse of the signal V. In this case the switch T_{d} is simultaneously closed, to ensure that the capacitor Cₛ will not be charged and the diac D will not be triggered before the next pulse of the voltage V.

In the second instance (signal V of the DC type), the switch Tₑ is used in order to avoid that, once set into oscillation, the half-bridge 112 will continue to oscillate indefinitely, preventing the dimming action, not being it possible to adjust the length of the oscillation periods during which the energy transfer towards the light source L takes place.

Once the presence of a DC signal V has been detected, the unit 108 acts in a clocked mode, by closing the switch Tₑ in order to stop the oscillation of the half-bridge 112. Once the oscillation has been stopped, the switch Tₑ is opened again, so as to set the half-bridge into oscillation again. Within this sequence of stopping and re-starting the oscillation of the half-bridge 112 it is possible to adjust, on the basis of the commands received on the control line DI, the length of the oscillation periods during which the energy transfer towards the light source L takes place, and therefore to perform the intended dimming action.

In the embodiment presently considered, it is foreseen that both switches T_{d} and Tₑ are commanded in a coordinated fashion (for example through a PWM signal with a square wave form, in which the frequency is fixed and the duty cycle is controlled). This aims at avoiding that, for example, the diac D may be in the triggering state, trying to start the oscillation of the half-bridge 112, while the switch Tₑ is operating to stop the oscillation.

The driving signals PWM may be produced by a dedicated generator, or they may be derived from an internal or external oscillator 116, normally associated with the microprocessor 108.

For the operation with a DC signal V, the opening/closing frequency of the switches T_{d} and Tₑ may be set to a value (e.g. 100 Hz) sufficiently high as to avoid at any rate undesirable flickering phenomena.

In an embodiment, it is possible to use the switch Tₑ also for stopping the electronic converter in case of an abnormal condition (for example an overload or unduly high temperature).

The microprocessor configuration to enable the setting of the operating mode (AC or DC) and the PWM signal generation according to the discussed features can be obtained through software, on the basis of well-known criteria.

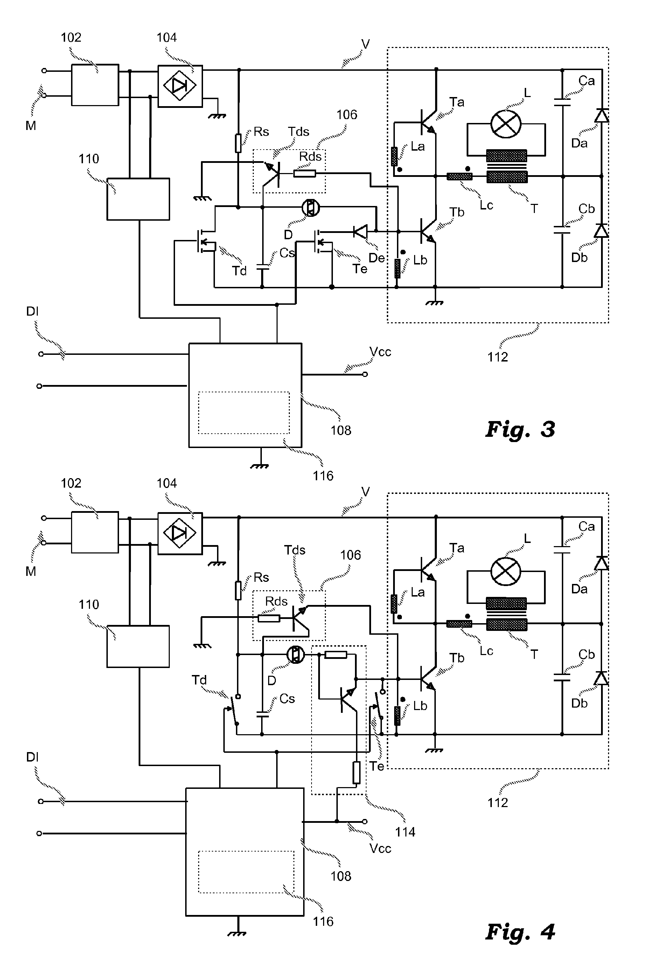

Figure 3 shows an embodiment in which the switches T_{d} and Tₑ are MOSFET transistors.

In the embodiment shown, the transistor Tₑ has moreover a diode Dₑ connected in series, so as to reduce the influence of the body diode of the transistor Tₑ on the normal operation of the half-bridge.

The transistor T_{d} may be a normal signal transistor, that need not fulfil any particular requirement, for example as regards the resistance "Rdson", i.e. the resistance the transistor opposes to the current flow in a saturated condition. For the transistor Tₑ a low Rdson value is preferable, so as to avoid the generation, by the saturation voltage "Vdsat" (plus the voltage through the diode Dₑ), of a voltage at the base of the transistor T_{d} which prevents the deactivation. In an embodiment, the diode Dₑ is a Schottky diode.

The stop circuit 106 of the diac D can be designed according to various known solutions.

For example, the stop circuit 106 can be a diode, connected to the emitter of the transistor Tₐ (i.e. the collector of transistor T_{b}).

Figure 3 shows an embodiment in which the stop circuit 106 is composed by a transistor T_{ds} and a resistor R_{ds}, where the emitter of the transistor T_{ds} is connected to ground, the collector of the transistor T_{ds} is connected to the capacitor Cₛ and the resistor R_{ds} is connected between the base of the transistor T_{ds} and the base of the transistor T_{b}.

Figure 4 shows an embodiment in which the stop circuit 106 is comprised of a transistor T_{ds} and a resistor R_{ds}, wherein the emitter of the transistor T_{ds} is connected to the base of the transistor T_{b}, the collector of the transistor T_{ds} is connected to the capacitor Cₛ and the resistor R_{ds} is connected between the base of the transistor T_{ds} and ground.

The embodiment of Figure 4 also comprises a charge amplifier 113, that improves the discharge of the start-up capacitor Cₛ. In this way, a pulse coming from the main is not able to increase the voltage through the capacitor Cₛ, so as to activate the transistor T_{b} when the transistor Tₐ is already active.

A more detailed description of such stop and starter circuits is found in PCT/IB2008/002480.

Of course, without prejudice to the underlying principles of the invention, the details and the embodiments may vary, even appreciably, with respect to what has been described by way of example only, without departing from the scope of the invention as defined by the annexed claims.

## Claims

1. A device for driving light sources (L), including:
- a self-oscillating output stage (112) for driving at least one light source (L), said output stage (112) having a supply line for a supply signal (V), and
- a starter circuit (Rₛ, Cₛ, D, T_{d}) coupled to said supply line for starting the self-oscillation of said output stage (112),
**characterized in that** said device includes:
- an electronic switch (Tₑ) associated with said output stage (112), said electronic switch (Tₑ) being configured for stopping selectively the oscillation of said output stage (112), and
- a control circuit (108) adapted for detecting the presence of a DC supply signal (V) on said supply line adapted to induce the oscillation of said self-oscillating output stage (112); said control circuit (108) being configured, in the presence of a DC supply signal to drive said electronic switch (Tₑ) and selectively stop the oscillation of said output stage (112).

2. The device of Claim 1, wherein said control circuit (108) includes a control line (DI) for receiving a dimming command for said at least one light source (L), and wherein said control circuit (108) is configured, in the presence of a DC supply signal (V), to activate and de-activate said electronic switch (Tₑ) as a function of said dimming command.

3. The device of Claim 2, wherein said control circuit (108) is configured, in the presence of a DC supply signal (V), to drive said electronic switch (Tₑ) with a pulsed signal modulated with a Pulse-Width Modulation as a function of said dimming command.

4. The device of any of the previous claims, wherein said self-oscillating output stage (112) is a half-bridge.

5. The device of any of the previous claims, wherein said starter circuit (Rₛ, Cₛ, D, T_{d}) includes a trigger component, such as e.g. a diac (D), adapted for starting the self-oscillation of said output stage (112), said trigger component (D) being charged from said supply signal (V).

6. The device of Claim 5, wherein said starter circuit (Rₛ, Cₛ, D, T_{d}) includes a RC network (Rₛ, Cₛ), and wherein said trigger component (D) is charged from said supply signal (V) via said RC network (Rₛ, Cₛ).

7. The device of any of the previous claims, wherein said starter circuit (Rₛ, Cₛ, D, T_{d}) includes a second electronic switch (T_{d}) to selectively induce oscillation of said self-oscillating output stage (112).

8. The device of Claim 7, wherein said control circuit (108) is configured to detect the presence of an AC supply signal (V) and de-activate said electronic switch (Tₑ) in the presence of an AC supply signal (V).

9. The device of Claim 7 or Claim 8, wherein said control circuit (108) is configured for driving said electronic switch (Tₑ) and said second electronic switch (T_{d}) in a synchronized manner.

10. The device of any of the previous claims, including a stop circuit (106) to stop said starter circuit (Rₛ, Cₛ, D, T_{d}) when self-oscillation of said output stage (112) is started.

11. A method for driving light sources (L) with a self-oscillating output stage (112) having a supply line for a supply signal (V), the method including producing selectively the self-oscillation of said output stage (112) and being **characterized in that** it includes:
- detecting the presence of a DC supply signal (V) on said supply line adapted to induce the oscillation of said self-oscillating output stage (112), and
- in the presence of an DC supply signal (V), stopping selectively the oscillation of said output stage (112).

12. A computer program product loadable into the memory of a computer and including software code portions adapted for performing the steps of the method of Claim 11 when the product is run on a computer.
